(19) Europäisches Patentamt
European Patent Office
Office européen des brevets

(11) **EP 3 321 754 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(51) Int Cl.:
***G05B 19/416*** *(2006.01)*

(21) Anmeldenummer: **16198398.6**

(22) Anmeldetag: **11.11.2016**

(54) **VERFAHREN ZUR OPTIMIERUNG VON BEWEGUNGSPROFILEN, COMPUTERPROGRAMMPRODUKT, STEUEREINRICHTUNG UND ANLAGE ODER ROBOTER**

METHOD FOR OPTIMIZING OF MOVEMENT PROFILES, COMPUTER PROGRAM PRODUCT, CONTROL DEVICE AND INSTALLATION OR ROBOT

PROCÉDÉ D'OPTIMISATION DE PROFILES DE MOUVEMENT, PRODUIT-PROGRAMME INFORMATIQUE, DISPOSITIF DE COMMANDE ET INSTALLATION OU ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.05.2018 Patentblatt 2018/20**

(73) Patentinhaber: **Siemens Aktiengesellschaft
80333 München (DE)**

(72) Erfinder:
• **Mattil, Dirk
91096 Möhrendorf (DE)**
• **Thiemann, Sebastian
90449 Nürnberg (DE)**
• **Werner, Andreas
51789 Lindlar (DE)**

(56) Entgegenhaltungen:
**EP-A1- 2 680 095        EP-A1- 2 952 991
EP-A1- 3 037 903        DE-A1-102014 223 898**

EP 3 321 754 B1

**Beschreibung**

Die Erfindung betrifft ein Verfahren zur Optimierung von Bewegungsprofilen, ein Computerprogrammprodukt sowie eine Anlage oder einen Roboter.

Bewegungsprofile, wobei zumindest ein Slave-Bewegungsprofil von einem Master-Bewegungsprofil abhängt, werden auch als Kurvenscheiben-Bewegungsprofile oder kurz als Kurvenscheiben oder auch als elektronisches Kurvengetriebe bezeichnet. Kurvenscheiben-Bewegungsprofile sind heute weit verbreitet, müssen aber oft händisch optimiert werden. Eine solche Optimierung ist nachteilhaft zeitaufwendig. Antriebe weisen regelmäßig Randbedingungen wie eine maximale Drehgeschwindigkeit oder eine maximale Beschleunigung auf.

Die Offenlegungsschrift DE 10 201 223 898 A1 zeigt ein computerbasiertes Entwurfssystem für ein elektrisches Antriebssystem mit Kurvenscheibeneditor, Grenzwertspeicher und Grenzwertüberwachungseinrichtung.

Die europäische Patentanmeldung EP 2 952 991 A1 zeigt ein Verfahren zum verlustminimalen Bewegen zweier Achsen mittels einem Beschleunigungsprofils. Ein jeweiliges Beschleunigungsprofil wird dabei so optimiert, dass es innerhalb einer Zeitspanne mindestens einen kontinuierlichen Übergang von einem Beschleunigungswert zu einem anderen Beschleunigungswert besitzt.

Die europäische Patentanmeldung EP 2 680 095 A1 zeigt eine CPU einer PLC zur Ausführung einer Bewegungssteuerung und Ablaufsteuerung. Dabei werden CAM-Tabellen eingesetzt. Bei einer Änderung der Phase oder Verschiebung wird eine geänderte CAM-Tabelle eingesetzt.

DE 10 2007 049 447 A1 offenbart ein Verfahren zur elektronischen Nachbildung einer solchen Kurvenscheibe.

Aufgrund der schwierigen und insbesondere zeitlich aufwendigen Bestimmung eines solchen Kurvenscheiben-Bewegungsprofils ist es Aufgabe der Erfindung, ein verbessertes Verfahren bereitzustellen, um Bewegungsprofile zu optimieren.

Die Aufgabe wird durch ein Verfahren nach Anspruch 1 gelöst.

Die Aufgabe wird weiter durch ein Computerprogrammprodukt gemäß Anspruch 10, durch eine Steuereinrichtung nach Anspruch 11 sowie durch eine Anlage oder einen Roboter gemäß Anspruch 12 und durch eine Recheneinheit nach Anspruch 13 gelöst.

Vorteilhafte Weiterentwicklungen und Ausgestaltungen sind Gegenstand der jeweils abhängigen Ansprüche.

Bei dem Verfahren zur Optimierung eines Bewegungsprofils hängt zumindest ein Slave-Bewegungsprofil jeweils von einem Master-Bewegungsprofil ab,

- wobei das jeweilige Slave-Bewegungsprofil Randbedingungen unterliegt,
- wobei optimierte Bewegungsabläufe bereitgestellt werden,
- wobei das Master-Bewegungsprofil und das zumindest eine Slave-Bewegungsprofil einen Definitionsbereich aufweisen und der jeweilige Definitionsbereich eine Mehrzahl von Interpolationspunkten aufweist, wobei die Interpolationspunkte den jeweiligen Definitionsbereich in Bereiche einteilen,
- wobei eine Toleranz für das Master-Geschwindigkeitsprofil vorgegeben ist,
- wobei das Verfahren folgende Verfahrensschritte umfasst:

  - **(S1)** Definition der Bereiche durch die Interpolationspunkte,
  - **(S2)** Definition der Randbedingungen des jeweiligen Slave-Bewegungsprofils,
  - **(S3)** Verteilung der Interpolationspunkte auf den jeweiligen Definitionsbereich des Master-/Slave-Bewegungsprofils,
  - **(S4)** Bestimmung der jeweiligen Maximalgeschwindigkeit des Master-Bewegungsprofils bei Einhaltung der Randbedingungen in dem jeweiligen Bereich,
  - **(S5)** Bestimmung des Bereichs mit der höchsten Maximalgeschwindigkeit des Master-Bewegungsprofils,
  - **(S6)** Bestimmung des Bereichs mit der niedrigsten Maximalgeschwindigkeit des Master-Bewegungsprofils,
  - **(S7)** Prüfen, ob die Differenz der höchsten Maximalgeschwindigkeit und der niedrigsten Maximalgeschwindigkeit größer oder kleiner als die Toleranz ist,

- falls die Differenz größer als die Toleranz ist:

  - **(S8)** wird der Bereich mit der höchsten Maximalgeschwindigkeit verkleinert, indem die Interpolationspunkte zueinander hin verschoben werden und/oder es
  - **(S9)** wird der Bereich mit der niedrigsten Maximalgeschwindigkeit vergrößert, indem die Interpolationspunkte voneinander weg verschoben werden, und/oder es
  - (S10) werden mit dem verkleinerten und dem vergrößerten Bereich die Verfahrensschritte (S4), (S5), (S6) und (S7) durchgeführt und
  - (S11) falls die Differenz kleinergleich ($\leq$) als die Toleranz ist, wird das jeweilige Bewegungsprofil als optimiertes Bewegungsprofil bereitgestellt.

Bevorzugt ist die Geschwindigkeit für das Master-Bewegungsprofil auf einen konstanten Wert eingestellt.

Die Erfindung gründet unter anderem auf der noch nicht zufriedenstellend gelösten Aufgabe, Slave-Bewegungsprofile, die von einem Master-Bewegungsprofil abhängig sind, gleichzeitig und automatisiert zu optimieren.

Ein Bewegungsprofil ist hierbei der, insbesondere zeitliche, Verlauf der (Dreh-)Geschwindigkeit oder der Strecke (bei einer linearen Bewegung) bzw. eines Drehwinkels (bei einer Drehbewegung).

Oft ist das jeweilige Bewegungsprofil periodisch. Bei einer periodisch wiederkehrenden Bewegung ist vorteilhaft der Definitionsbereich eine Periode der Bewegung.

Ein Bewegungsprofil ist entweder ein virtuelles Bewegungsprofil oder ein reales Bewegungsprofil. Ein virtuelles Bewegungsprofil ist beispielsweise das Bewegungsprofil einer virtuellen Achse.

Eine virtuelle Achse kann insbesondere bei einem Roboter eine Bewegung eines Endeffektors entlang einer Richtung sein. Eine reale Achse entspricht bei einem Roboter einem Antrieb zur Bewegung eines Roboterarms.

Ein reales Bewegungsprofil beschreibt allgemein die Bewegung eines Antriebs, wie eines Elektromotors oder eines Linearmotors.

Bei einer Drehbewegung kann also der Definitionsbereich eine Umdrehung (Phi=0...360°) sein. Das Bewegungsprofil wird vorzugsweise als die jeweilige Position innerhalb des Definitionsbereichs angegeben.

Regelmäßig sind die Bewegungsprofile durch Randbedingungen in ihrer Form begrenzt. Randbedingungen sind regelmäßig durch physikalische Grenzen der Antriebe, wie maximale Beschleunigung, maximale Geschwindigkeit oder maximaler Ruck, begründet.

Das optimierte Bewegungsprofil wird durch die Optimierung der Slave-Bewegungsprofile und optional des Master-Bewegungsprofils bereitgestellt. Vorzugsweise werden die optimierten Bewegungsprofile einer Steuereinrichtung, beispielhaft einer Speicherprogrammierbaren Steuerung (SPS) bereitgestellt. Die Steuereinrichtung dient zur Steuerung oder Regelung von mehreren Antrieben anhand der optimierten Bewegungsprofile.

Unter einem Interpolationspunkt werden Punkte des Bewegungsprofils verstanden, welche im Definitionsbereich verteilt werden. An den Interpolationspunkten ist insbesondere der Wert des Slave- oder Master-Bewegungsprofils vorgegeben. Anhand der Werte des jeweiligen Bewegungsprofils kann das jeweilige Bewegungsprofil definiert oder vorgegeben sein.

## ZU DEN EINZELNEN VERFAHRENSSCHRITTEN

### Zu (S1)

Der Definitionsbereich wird in Bereiche eingeteilt. Ein Bereich ist jeweils durch zwei Interpolationspunkte begrenzt. Der Bereich, der jeweils an den Rand des Definitionsbereichs angrenzt, wird vom jeweiligen (äußeren) Rand des Definitionsbereichs begrenzt. Dies bedeutet, dass die Randpunkte des Definitionsbereichs den Interpolationspunkten entsprechen, welche den jeweiligen Bereich zum Rand hin begrenzen.

### Zu (S2)

Als Randbedingungen wird beispielhaft die minimale und/oder maximale Geschwindigkeit des jeweiligen Slave-Bewegungsprofils zugeordnet. Die Randbedingung wird vorzugsweise durch eine jeweilige Begrenzung der Ableitung des jeweiligen Slave-Bewegungsprofils vorgegeben.

### Zu (S3)

Die Interpolationspunkte werden auf dem Definitionsbereich bevorzugt derart verteilt, dass der erste Interpolationspunkt etwa in der Mitte des Definitionsbereichs angeordnet wird. Der Interpolationspunkt teilt den Definitionsbereich in zwei Bereiche. Weitere Interpolationspunkte können im jeweiligen Bereich verteilt werden. Durch die Interpolationspunkte werden die jeweiligen Bereiche in eine Mehrzahl kleinerer Bereiche geteilt.

Die Verteilung und/oder die Reihenfolge der Interpolationspunkte werden bevorzugt vom Anwender oder vom Computerprogrammprodukt selbst festgelegt. Zu Anfang ist eine Gleichverteilung der Interpolationspunkte in dem jeweiligen Definitionsbereich vorteilhaft. Unter einer Gleichverteilung wird eine Verteilung verstanden, bei der die Interpolationspunkte jeweils den gleichen Abstand zueinander aufweisen.

Vorteilhaft sind die Bereiche etwa gleich groß gewählt. Die Interpolationspunkte können jedoch auch gemäß einem Zufallsprinzip (analog einer Monte-Carlo-Verteilung) auf den Bereich verteilt werden.

Darüber hinaus können die Interpolationspunkte an Nullstellen von Polynomen wie Legendre-Polynome oder Tschebyschow-Polynome oder anderen orthogonalen Polynom-Funktionen angeordnet sein.

Bevorzugt werden lediglich die jeweiligen Abstände der Interpolationspunkte vom Benutzer vorgegeben. Eine Reihenfolge der Anordnung der Interpolationspunkte ist vorgegeben.

**Zu (S4)**

Bei der Bestimmung der Maximalgeschwindigkeiten des Master-Bewegungsprofils wird beachtet, dass keines des jeweiligen Slave-Bewegungsprofils eine Randbedingung verletzen darf.

Durch die jeweilige Randbedingung des jeweiligen Slave-Bewegungsprofils wird die jeweilige Maximalgeschwindigkeit des Master-Bewegungsprofils festgelegt. Die Festlegung erfolgt jeweils für einen Bereich. So wird einem Bereich jeweils eine Maximalgeschwindigkeit des Masterbewegungsprofils zugeordnet.

Die maximale Geschwindigkeit im jeweiligen Definitionsbereich des Master-Bewegungsprofils entspricht vor der Optimierung durch das hier vorgestellte Verfahren derjenigen Geschwindigkeit, welche durch den Bereich der minimalen Maximalgeschwindigkeit bestimmt wird.

**Zu (S5) und (S6)**

Es wird zum einen der Bereich (ein erster Bereich) bestimmt, in dem die jeweilige Randbedingung des jeweiligen Slave-Bewegungsprofils die höchste Maximalgeschwindigkeit des Master-Bewegungsprofils zulässt.

Es wird zum anderen der Bereich (ein zweiter Bereich) bestimmt, in dem die jeweilige Randbedingung des jeweiligen Slave-Bewegungsprofils die niedrigste (geringste) Maximalgeschwindigkeit des Master-Bewegungsprofils zulässt.

**Zu (S7)**

Im nächsten Schritt wird die Differenz aus der höchsten Maximalgeschwindigkeit und der niedrigsten Maximalgeschwindigkeit bestimmt. Bei nicht optimierten Bewegungsprofilen ist die Differenz in der Regel höher als die Toleranz. Die Toleranz ist ein Maß dafür, wie gut die Bewegungsprofile optimiert sind. Die Toleranz wird vorzugsweise vom Benutzer festgelegt. Alternativ können die nachfolgenden Verfahrensschritte (S4) bis (S8) solange ausgeführt werden, bis die Änderung der Differenz sich einer Grenz-Differenz von Null annähert.

**Zu (S8), (S9) und (S10)**

Nachdem derjenige Bereich mit der höchsten Maximalgeschwindigkeit (erster Bereich) und derjenige Bereich mit der niedrigsten Maximalgeschwindigkeit (zweiter Bereich) ermittelt sind, wird der erste Bereich verkleinert und der zweite Bereich vergrößert.

In der Regel wird der zweite Bereich um soweit verkleinert wie der andere Bereich vergrößert wird. So wird der Definitionsbereich nicht verändert.

Durch die Verkleinerung des ersten Bereichs werden die beiden Interpolationspunkte zusammengerückt. Die jeweiligen Slave-Bewegungsprofile werden in dem Bereich gestaucht. So vermindert sich aufgrund der Randbedingungen die Maximalgeschwindigkeit des Master-Bewegungsprofils in dem ersten Bereich. Entsprechend umgekehrtes gilt für den zweiten Bereich.

Die Verschiebung der Interpolationspunkte wird solange wiederholt, bis die Differenz kleiner oder kleinergleich der Toleranz ist.

**Zu (S11)**

Falls die Differenz kleiner oder kleinergleich der Toleranz ist, sind die Bewegungsprofile optimiert. Die optimierten Bewegungsprofile, also insbesondere die optimierten Slave-Bewegungsprofile werden der Steuereinrichtung oder einer Bewegungssteuerung bereitgestellt.

**Vorteil des Verfahrens**

Ein wesentlicher Vorteil des vorstehend ausgeführten Verfahrens ist es, dass das Master-Bewegungsprofil nicht verändert wird. So ist eine besonders hohe Genauigkeit der Bewegung, die durch die optimierten Bewegungsprofile vorgegeben sind, möglich.

Vorteilhaft wird das Master-Bewegungsprofil geändert, so dass sich die jeweilige Geschwindigkeit des Master-Bewegungsprofils, insbesondere in dem jeweiligen Bereich, ändert. Somit ergibt sich vorteilhaft, dass die Interpolationspunkte der jeweiligen (Master-/Slave-)Bewegungsprofile gleichzeitig abgearbeitet werden. Somit kann eine konstante Geschwindigkeit des Master-Bewegungsprofils erreicht werden, ohne dass Randbedingungen, insbesondere der Bewegungsprofile der Slave-Bewegungsprofile, verletzt werden.

### Beschreibung des Computerprogrammproduktes

Das Computerprogrammprodukt ist dazu ausgebildet, das hier beschriebene Verfahren mit Hilfe einer Recheneinheit durchzuführen. Dazu ist das Computerprogrammprodukt auf der Recheneinheit installiert und wird zur Durchführung in einen Arbeitsspeicher geladen. Die Ausgabe der optimierten Bewegungsprofile erfolgt über ein Interface der Recheneinheit. Die optimierten Bewegungsprofile werden vorzugsweise an die Steuereinrichtung bereitgestellt.

### Beschreibung der Steuereinrichtung

Die Steuereinrichtung dient zur Steuerung oder Regelung von zumindest einem Antrieb, insbesondere von Elektromotoren oder von Linearmotoren. Der Steuereinrichtung ist vorzugsweise eine Recheneinheit zugeordnet. Die Recheneinheit dient zur Durchführung des Verfahrens, insbesondere mit dem oben beschriebenen Computerprogrammprodukt. Die Steuereinrichtung ist bevorzugt als Speicherprogrammierbare Steuerung (SPS) ausgebildet.
Bevorzugt dient die Steuereinrichtung zur Steuerung oder Regelung von zumindest einem Master-Antrieb und einem Slave-Antrieb. Hierbei ist die Steuereinrichtung, insbesondere mit Unterstützung einer Recheneinheit zur Steuerung oder Regelung der Antriebe gemäß dem jeweiligen optimierten Bewegungsprofil ausgebildet. Hierbei umfasst die Steuereinrichtung die Recheneinheit zur Bereitstellung der optimierten Bewegungsprofile oder der Steuereinrichtung ist der Recheneinheit zugeordnet.

### Beschreibung der Anlage oder des Roboters

Die Anlage oder der Roboter weist die Antriebe auf, welche gemäß den optimierten Bewegungsprofilen die Bewegung des Roboters oder der Anlage steuern. Die Anlage ist vorzugsweise als Handling-System, als Verpackungsmaschine, als Produktionsmaschine oder als Werkzeugmaschine ausgebildet. Die Anlage weist zur Steuerung oder Regelung der Antriebe die voranstehend beschriebene Steuereinrichtung auf.

### Weitere vorteilhafte Ausgestaltungen des Verfahrens

In einer vorteilhaften Ausgestaltung des Verfahrens weist das Master-Bewegungsprofil eine konstante Geschwindigkeit oder eine nahezu konstante Geschwindigkeit auf.
Dies gilt insbesondere für einen geschwindigkeitsoptimierten Durchlauf der jeweiligen Bewegungsprofile. Unter einer nahezu konstanten Geschwindigkeit wird verstanden, dass der Master-Bewegungsablauf auf eine konstante Geschwindigkeit geregelt wird und die jeweiligen Slave-Bewegungsprofile an dem Master-Geschwindigkeitsprofil ausgerichtet sind.
Durch eine zeitlich nahezu (im Rahmen der Regelgenauigkeit) gleichbleibende Geschwindigkeit des Antriebs, dessen Bewegung durch das Master-Geschwindigkeitsprofil vorgegeben wird, kann ein Kanal der Steuereinrichtung bzw. der Bewegungssteuerung besonders einfach ausgebildet sein.
In einer weiteren vorteilhaften Ausgestaltung des Verfahren werden insbesondere die Verfahrensschritte (S4) bis (S10), mehrmals durchgeführt.
Bei einer mehrfachen Ausführung der folgenden Verfahrensschritte:

- (S4) Bestimmung der jeweiligen Maximalgeschwindigkeit des Master-Bewegungsprofils bei Einhaltung der Randbedingungen (RB) in dem jeweiligen Bereich (B);
- (S5) Bestimmung des Bereichs mit der höchsten Maximalgeschwindigkeit des Master-Bewegungsprofils;
- (S6) Bestimmung des Bereichs mit der niedrigsten Maximalgeschwindigkeit des Master-Bewegungsprofils;
- S7) Prüfen, ob die Differenz der höchsten Maximalgeschwindigkeit und der niedrigsten Maximalgeschwindigkeit größer oder kleiner als die Toleranz ist:
- falls die Differenz größer als die Toleranz (T) ist,
- (S8) wird der Bereich mit der höchsten Maximalgeschwindigkeit verkleinert, indem die Interpolationspunkte zueinander hin verschoben werden und
- (S9) wird der Bereich mit der niedrigsten Maximalgeschwindigkeit vergrößert, indem die Interpolationspunkte voneinander weg verschoben werden,
- (S10) werden mit dem verkleinerten und dem vergrößerten Bereich die Verfahrensschritte (S4), (S5) (S6) und (S7) durchgeführt.

Durch die Mehrfachausführung der Optimierung werden nicht nur der Bereich mit der höchsten und niedrigsten Maximalgeschwindigkeit des Master-Bewegungsprofils berücksichtigt sondern auch die Bereiche mit den jeweils zweitgrößten, drittgrößten, ... Differenz.

Bei einer weiteren vorteilhaften Ausgestaltung des Verfahrens ist das jeweilige Slave-Bewegungsprofil über eine Kurvenscheibenfunktion mit dem Master-Bewegungsprofil verknüpft.

Unter einer Kurvenscheibenfunktion wird hier eine Funktion verstanden, welche in einer, insbesondere periodischen Art und Weise, eine Drehbewegung gemäß dem Master-Bewegungsprofils beschreibt. Eine Kurvenscheibenfunktion kann jedoch zwischen den jeweiligen Durchläufen geändert werden. Eine Kurvenscheibenfunktion kann aber auch eine weitere Funktion zweier Drehbewegungen sein.

Bei einer weiteren vorteilhaften Ausgestaltung des Verfahrens werden die Bereiche oder die Abstände zwischen den jeweils benachbarten Interpolationspunkten jeweils gleich groß gewählt.

Äquidistant angeordnete Interpolationspunkte weisen den Vorteil auf, dass die Bereiche jeweils gleich groß sind. Hierdurch können die Vergrößerung und die Verkleinerung des jeweils ersten bzw. zweiten Bereichs um einen Faktor, z.B. um jeweils 10 %, erfolgen.

Bei einer weiteren vorteilhaften Ausgestaltung des Verfahrens ist die jeweilige Randbedingung eine minimale/maximale Geschwindigkeit, eine minimale/maximale Beschleunigung und/oder ein minimaler/maximaler Ruck.

Die Randbedingungen des Master-Bewegungsprofils und/oder des jeweiligen Slave-Bewegungsprofils sind bevorzugt durch eine extremale (minimale oder maximale) Steigung oder Krümmung des Bewegungsprofils definiert. Die Steigung des Bewegungsprofils, das als eine Ort-Ort-Funktion oder eine Drehwinkel-Drehwinkel-Funktion dargestellt ist, entspricht einer Geschwindigkeits-Orts-Funktion bzw. einer Drehgeschwindigkeits-Drehwinkel-Funktion. Je nach Darstellung können auch Ort-Zeit-Funktionen bzw. Drehwinkel-Zeit-Funktionen zur Darstellung oder zur Optimierung gewählt werden.

Als Randbedingungen eignen sich sowohl globale oder lokale Beschränkungen der (Dreh-)Geschwindigkeit, der (Dreh-) Beschleunigung und/oder des Rucks. Ein Ruck bezeichnet allgemein die dritte zeitliche Ableitung der Ortfunktion bzw. Drehwinkel-Funktion.

In einer weiteren vorteilhaften Ausgestaltung des Verfahrens wird das Master-Geschwindigkeitsprofil nicht verändert.

Durch lediglich ein Verändern der jeweiligen Slave-Bewegungsprofile ist die Optimierung vereinfacht durchführbar. Bevorzugt weist hierbei das Master-Bewegungsprofil eine konstante Geschwindigkeit auf.

Bei einer weiteren vorteilhaften Ausgestaltung sind das Master-Bewegungsprofil und das jeweilige Slave-Bewegungsprofil über eine Kinematik-Transformation verknüpft.

Unter einer Kinematik-Transformation wird eine Transformation von zwei oder mehreren Bewegungsprofilen verstanden. Ein bevorzugtes Anwendungsgebiet der Kinematik-Transformation ist die Robotik.

Beispielhaft kann das Master-Bewegungsprofil die geradlinige Bewegung eines Endeffektors beschreiben. Das jeweilige zugeordnete Slave-Bewegungsprofil kann die jeweilige Bewegung des Antriebs für jeweils einen Roboterarm beschreiben.

Beispielhaft für eine Kinematik-Transformation bei einem vorgegebenen Master-Bewegungsprofil ist eine Denavit-Hartenberg-Transformation für eine direkte oder eine inverse Kinematik-Transformation.

Durch diese Ausführung können mit dem hier beschriebenen Verfahren Bewegungsprofile für den Einsatz in Robotern einfach und schnell optimiert werden.

Bei einer bevorzugten Ausgestaltung des Verfahrens ist das Master-Bewegungsprofil mit virtuellen Slave-Bewegungsprofilen verknüpft und das jeweilige virtuelle Slave-Bewegungsprofil ist mit jeweils einem realen Slave-Bewegungsprofil über die Kinematik-Transformation verknüpft.

Unter einem virtuellen Slave-Bewegungsprofil wird beispielhaft eine geradlinige Bewegung eines Endeffektors eines Roboters verstanden. Das virtuelle Slave-Bewegungsprofil orientiert sich beispielhaft an einer Bewegung einer Stelle eines Förderbandes, welches durch das Master-Bewegungsprofil beschrieben wird.

Aus dem jeweiligen Slave-Bewegungsprofil wird mit Hilfe der Kinematik-Transformation das reale Bewegungsprofil für die einzelnen Antriebe des Roboters berechnet.

Mit Hilfe des Verfahrens lassen sich, wie insbesondere die vorstehende Ausführungsform zeigt, komplexe Bewegungsaufgaben einfach und schnell optimieren.

Bei einer weiteren vorteilhaften Ausgestaltung des Verfahrens unterliegen das jeweilige virtuelle Bewegungsprofil und/oder das jeweilige reale Slave-Bewegungsprofil jeweils zumindest einer Randbedingung.

Die Randbedingungen ergeben sich hier insbesondere durch die physikalischen Grenzen bei der Bewegung (max. Beschleunigung, max. Geschwindigkeit,...) der jeweiligen Antriebe oder aus der Stabilität des jeweiligen Roboterarms.

Zur Berechnung der Maximalgeschwindigkeit des Master-Bewegungsprofils gelten folgende Zusammenhänge: Sei $f(x)$ eine Darstellung des jeweiligen Bewegungsprofils und $x$ eine Position/Ausrichtung, die von der Zeit $t$ abhängt.

Weiter gilt:

$$\frac{df}{dt} = \frac{df}{dx} \cdot \frac{dx}{dt} \; und \; sei \; \frac{dx}{dt} = \dot{x} \; sowie \; f\,'(x) = \frac{df}{dx}$$

Dann gilt für die maximale Geschwindigkeit (v_max_v oder als v_max bezeichnet) des Master-Bewegungsprofils bei einer Randbedingung, dass ein Slave-Bewegungsprofil eine maximale Geschwindigkeit aufweist:

$$v_{max} = \frac{\dot{x}}{f*(x)}$$

Die Formel gilt insbesondere für eine konstante Geschwindigkeit des Master-Bewegungsprofils.

Analog gilt für die maximale Geschwindigkeit (v_max_a oder als v_max bezeichnet) des Master-Bewegungsprofils bei einer Randbedingung, dass ein Slave-Bewegungsprofil eine maximale Beschleunigung aufweist:

$$v_{max} = \sqrt{\frac{\ddot{x}}{f''(x)}}$$

Darüber hinaus gilt für die maximale Geschwindigkeit (v_max_r oder als v_max bezeichnet) des Master-Bewegungsprofils bei einer Randbedingung, dass ein Slave-Bewegungsprofil einen maximalen Ruck (= zeitliche Änderung der Beschleunigung) aufweist:

$$v_{max} = \sqrt[3]{\frac{\dddot{x}}{f'''(x)}}$$

Im Folgenden wird die Erfindung anhand von Figuren näher beschrieben und erläutert. Die in den Figuren gezeigten Merkmale können selbstverständlich auch einzeln gemäß der Erfindung zu neuen Ausführungsbeispielen kombiniert werden, ohne den Geltungsbereich der Erfindung zu verlassen. Es zeigen

FIG 1    ein Verhältnis von Bewegungsprofilen,
FIG 2    mehrere Bewegungsprofile,
FIG 3    ein Ablaufschema,
FIG 4    den Einsatz einer Kinematik-Transformation sowie
FIG 5    eine Steuereinrichtung mit einer Recheneinheit.

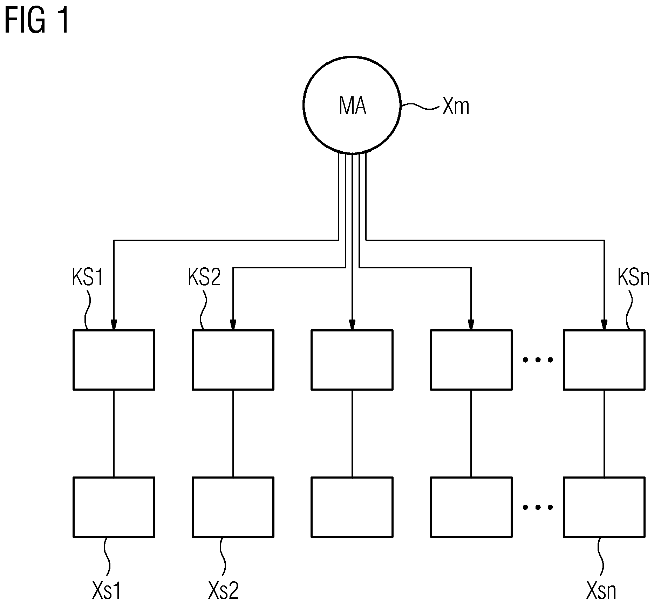

**FIG** 1 zeigt ein Verhältnis von Bewegungsprofilen Xm, Xs1, Xs2, Xsn. Ausgehend von einem Master-Bewegungsprofil Xm ist das jeweilige Slave-Bewegungsprofil Xs1, Xs2, Xsn über eine Kurvenscheibenfunktion KS1, KS2, KSn verknüpft. Die jeweilige Kurvenscheibenfunktion KS1, KS2, KSn legt das jeweilige Slave-Bewegungsprofil Xs1, Xs2, Xsn ausgehend von dem Master-Bewegungsprofil Xm fest. Das Master-Bewegungsprofil geht beispielhaft von einer realen Master-Achse MA oder einer virtuellen Master-Achse MA aus. Eine virtuelle Master-Achse MA wird im Stand der Technik auch als virtuelle Königsachse (z.B. bei Druckmaschinen) oder als Leitachse bezeichnet.

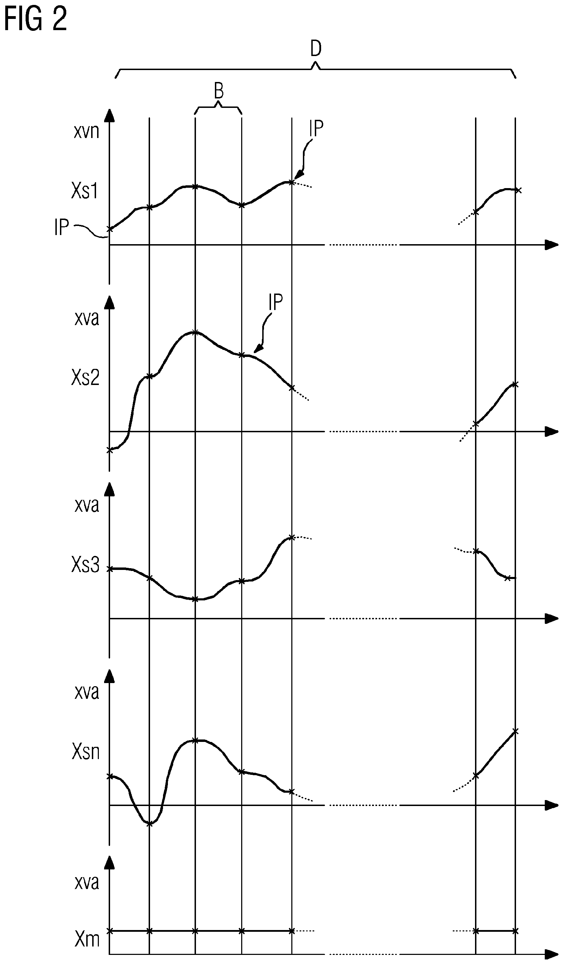

**FIG 2** zeigt mehrere Bewegungsprofile Xs1, Xs2, Xs3 Xsn, Xm. Die vier oberen Bewegungsprofile Xs1, Xs2, Xs3, Xsn sind Slave-Bewegungsprofile Xs1, Xs2, Xs3, Xsn. Unten ist das Master-Bewegungsprofil Xm gezeigt. Das Master-Bewegungsprofil Xm weist hier eine konstante Geschwindigkeit v auf. In der gezeigten Darstellung der Bewegungsprofile Xm, Xs1, Xs2, Xs3, Xsn erfolgt die Darstellung als Funktion des Ortes nach der Zeit bzw. nach einer Ausrichtung. Die gezeigte Darstellung kann auch als Funktion der Geschwindigkeit v in Abhängigkeit der Zeit bzw. der Ausrichtung verstanden werden. Das jeweilige Bewegungsprofil Xs1, Xs2, Xs3, Xsn, Xm weist jeweils einen Definitionsbereich D auf. Der Definitionsbereich D kann ein Zeitbereich, zumindest eine Umdrehung, oder eine Länge sein. Der Definitionsbereich D wird durch die Interpolationspunkte IP in Bereiche B eingeteilt. Hier sind die Interpolationspunkte IP ungefähr äquidistant gezeigt. Die Interpolationspunkte IP können aber auch so angeordnet sein, dass in Bereichen B, in denen ein Slave-Bewegungsprofil Xs1, Xs2, Xs3, Xsn eine schnelle Bewegung aufweist, dichter liegen als in Bereichen B, in denen das Slave-Bewegungsprofil Xs1, Xs2, Xs3, Xsn keine schnelle Bewegung aufweist.

Das jeweilige Bewegungsprofil Xs1, Xs2, Xs3, Xsn, Xm ist in Bereiche B eingeteilt. Die Bereiche B sind durch Interpolationspunkte IP begrenzt. Die Interpolationspunkte IP des jeweiligen Bewegungsprofils Xs1, Xs2, Xs3, Xsn, Xm geben an, an welcher Position x, mit welcher Geschwindigkeit v und/oder mit welcher Beschleunigung a das jeweilige Bewegungsprofil Xs1, Xs2, Xs3, Xsn, Xm verläuft. Hierbei sind die Interpolationspunkte IP für jedes Bewegungsprofil Xs1, Xs2, Xs3, Xsn, Xm an derselben Stelle angeordnet. Die Interpolationspunkte IP definieren den jeweiligen Definitionsbereich D.

Die jeweilige Randbedingung RB eines Slave-Bewegungsprofils Xs1, Xs2, Xs3, Xsn kann eine maximale Änderung der Bewegung eines Slave-Bewegungsprofils Xs1, Xs2, Xs3, Xsn sein. Dies entspricht einer maximalen Geschwindigkeit v bei einer Ortsdarstellung des jeweiligen Bewegungsprofils Xs1, Xs2, Xs3, Xsn, Xm.

Der besseren Übersicht halber sind die Bewegungsprofile Xs1, Xs2, Xs3, Xsn, Xm nicht über den gesamten Definitionsbereich D gezeigt sondern nur die ersten Bereiche B sowie der letzte Bereich B.

Die Abszisse zeigt beispielhaft einen Drehwinkel, und die Ordinate gibt dazu eine Position x für das jeweilige Bewegungsprofil Xs1, Xs2, Xs3, Xsn, Xm an.

Die Geschwindigkeit v des jeweiligen Bewegungsprofil Xs1, Xs2, Xs3, Xsn, Xm ist dann die Ableitung des jeweiligen Bewegungsprofils Xs1, Xs2, Xs3, Xsn, nämlich v=dx/dt. Entsprechend ist die Beschleunigung a die zweite Ableitung a=dv/dt=d(dx/dt)/dt.

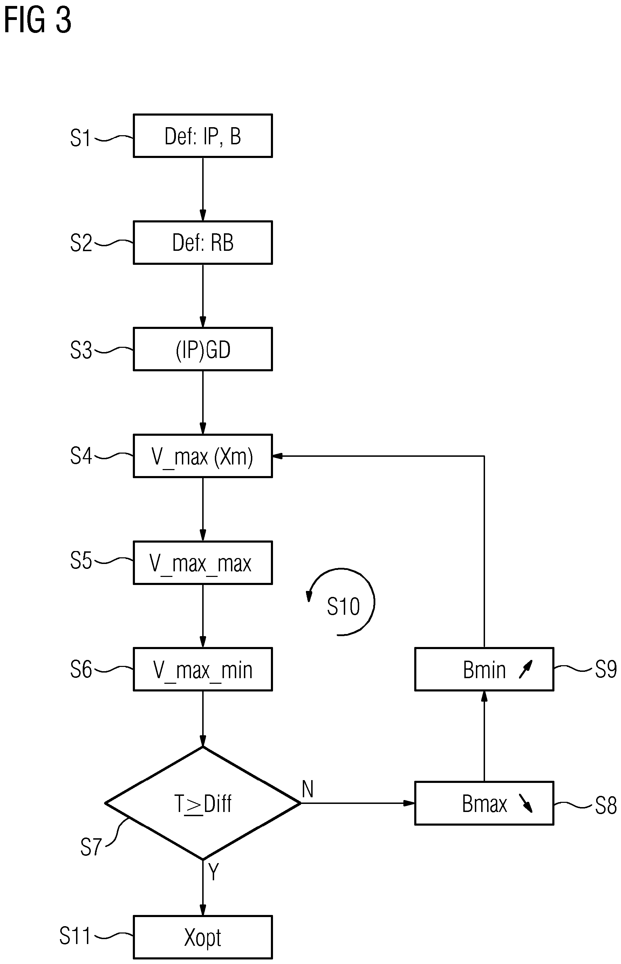

**FIG 3** zeigt ein Ablaufschema. Das Ablaufschema zeigt den Ablauf der einzelnen Verfahrensschritte zur Optimierung der Bewegungsprofile Xs1, Xs2, Xs3, Xsn, Xm. Nachfolgend werden die Verfahrensschritte S1 bis S11 vorgestellt und erläutert.

Im ersten Verfahrensschritt S1 wird das jeweilige Slave-Bewegungsprofil Xs1, Xs2, Xs3, Xsn vorgegeben. Hierzu wird insbesondere das Slave-Bewegungsprofil Xs1, Xs2, Xs3, Xsn an den Interpolationspunkten IP definiert. So kann ein Bewegungsprofil an einer Mehrzahl von Interpolationspunkten IP durch Position x, Geschwindigkeit v und/oder Beschleunigung a vorgegeben sein. Falls bereits Bewegungsprofile Xs1, Xs2, Xs3, Xsn, Xm vorgegeben sind, können Interpolationspunkte IP im Definitionsbereich D gewählt werden. In der Regel sind die Interpolationspunkte IP jeweils an derselben Stelle des jeweiligen Bewegungsprofils Xs1, Xs2, Xs3, Xsn, Xm vorgegeben.

Im zweiten Verfahrensschritt S2 werden Randbedingungen RB festgelegt. Eine Randbedingung kann eine maximale Geschwindigkeit eines Bewegungsprofils Xs1, Xs2, Xs3, Xsn in zumindest einem Bereich B sein. Eine Randbedingung RB kann auch eine maximale Beschleunigung bei einem Bewegungsprofil Xs1, Xs2, Xs3, Xsn sein. Randbedingungen sind bevorzugt als maximale Ableitungen des jeweiligen Bewegungsprofils Xs1, Xs2, Xs3, Xsn, Xm nach der Zeit vorgegeben.

Im dritten Verfahrensschritt S3 werden die Interpolationspunkte IP im Definitionsbereich D des jeweiligen Bewegungsprofils Xs1, Xs2, Xs3, Xsn, Xm verteilt. Die Verteilung wird bevorzugt so gewählt, dass die Bereiche B, jeweils die gleiche Größe aufweisen. Falls die Interpolationspunkte bereits vorgegeben sind, können diese auch verschoben werden.

Im vierten Verfahrensschritt S4 wird die jeweils mögliche Maximalgeschwindigkeit v_max des Master-Bewegungsprofils Xm für den jeweiligen Bereich berechnet. Die Berechnung der Maximalgeschwindigkeit v_max erfolgt beispielhaft durch

$$v\_\text{max}\_v = \frac{dx/dt}{df(x)/dx}$$

Hierbei bedeutet v_max_v die Maximalgeschwindigkeit bei einer geschwindigkeitsorientierten Randbedingung RB.

Bei einer vorgegebenen maximalen Geschwindigkeit als Randbedingung RB eines Slave-Bewegungsprofils Xs1, Xs2, Xs3, Xsn wird die maximale Geschwindigkeit v_max als Randbedingung RB berücksichtigt. Hierbei ist f(x) die Ortsfunktion des jeweiligen Bewegungsprofils Xs1, Xs2, Xs3, Xsn. Mit anderen Worten gilt f(x) = Xs1 oder f(x) = Xs2 oder ....

Bei einer vorgegebenen maximalen Beschleunigung eines Slave-Bewegungsprofils Xs1, Xs2, Xs3, Xsn ist die Maximalgeschwindigkeit v_max berechenbar:

$$v\_\text{max}\_a = \sqrt{\frac{d^2x/dt^2}{d^2f/dx^2}}$$

Bei Vorliegen mehrerer Randbedingungen RB in einem Bereich B, beispielshaft einer begrenzten Geschwindigkeit v eines ersten Slave-Bewegungsprofils Xs1, Xs2, Xs3, Xsn und einer begrenzten Beschleunigung eines weiteren Slave-Bewegungsprofils Xs1, Xs2, Xs3, Xsn, gilt das jeweilige Minimum der Maximalgeschwindigkeiten v_max=min{v_max_v, v_max_a}. Die jeweilige Maximalgeschwindigkeit v_max wird für jeden Bereich B berechnet.

Im fünften Verfahrensschritt S5 wird die höchste Maximalgeschwindigkeit v_max_max=max{v_max} bestimmt, bzw. der Bereich B mit der höchsten Maximalgeschwindigkeit v_max_max ausgewählt.

Im sechsten Verfahrensschritt S6 wird die niedrigste Maximalgeschwindigkeit v_max_min=min{v_max} bestimmt, bzw. der Bereich B mit der niedrigsten Maximalgeschwindigkeit v_max_min ausgewählt.

Im siebten Verfahrensschritt S7 wird die Differenz Diff der höchsten Maximalgeschwindigkeit v_max_max und der niedrigsten Maximalgeschwindigkeit v_max_min berechnet. Die Differenz wird mit einer Toleranz T verglichen. Dabei gibt es zwei Möglichkeiten: Die Differenz Diff ist kleiner oder gleich (kleinergleich) der Toleranz T oder die Differenz Diff ist größer als die Toleranz T. Falls die Differenz Diff größer als die Toleranz T ist (Fall Y), wird als nächstes der achte Verfahrensschritt S8 durchgeführt. Ist die Differenz Diff dagegen kleiner oder gleich der Toleranz T (Fall N), springt das Verfahren zum elften Verfahrensschritt S11.

Beim achten Verfahrensschritt S8 wird der Bereich Bmax mit der höchsten Maximalgeschwindigkeit v_max_max verkleinert. Durch die Verkleinerung dieses Bereiches Bmax wird der entsprechende Bereich B des jeweiligen Slave-Bewegungsprofils Xs1, Xs2, Xs3, Xsn ebenfalls verkleinert. Die entsprechende Geschwindigkeit v oder die entsprechende Beschleunigung a in dem jeweiligen Bereich Bmax wird vorzugsweise erhöht und näher an die jeweilig vorliegende Randbedingung angenähert.

Beim neunten Verfahrensschritt S9 wird der Bereich Bmin mit der niedrigsten Maximalgeschwindigkeit v_max_min vergrößert. Durch die Vergrößerung dieses Bereiches Bmin wird auch der entsprechende Bereich des jeweiligen Slave-Bewegungsprofils Xs1, Xs2, Xs3, Xsn vergrößert. Die entsprechende Geschwindigkeit v oder die entsprechende Beschleunigung a in dem jeweiligen Bereich Bmin wird dadurch verringert. Insbesondere beim neunten Verfahrensschritt wird vorzugsweise die Geschwindigkeit des Master-Bewegungsprofils Xm erhöht.

Im zehnten Verfahrensschritt S10 werden die jeweils geänderten Bewegungsprofile Xs1, Xs2, Xs3, Xsn mit den angepassten Bereichen wieder dem Verfahrensschritt S4 zugeführt und die Schleife der Verfahrensschritte S4 bis S9 werden so lange durchgeführt, bis die Differenz Diff kleiner als die Toleranz T ist.

Nach einigen Durchläufen ist in der Regel die Differenz Diff kleiner oder zumindest gleich der Toleranz T. In diesem Fall (Fall N) wird der elfte Verfahrensschritt S11 durchgeführt.

Beim elften Verfahrensschritt S11 werden die optimierten Bewegungsprofile Xopt an eine Steuereinrichtung bereitgestellt. Anhand der nun vorliegenden optimierten Bewegungsprofile kann eine Anlage, beispielhaft eine Produktionsmaschine, ihre jeweiligen Antriebe steuern oder regeln.

In der Regel wird die Toleranz dabei vom Benutzer vorgegeben. Je geringer die Toleranz gewählt wird, desto besser optimiert sind die Bewegungsprofile.

Ziel ist es hier insbesondere, die Geschwindigkeit des Master-Bewegungsprofils Xm bei unveränderten Randbedingungen der Slave-Bewegungsprofile Xs1, Xs2, Xs3, Xsn zu erhöhen.

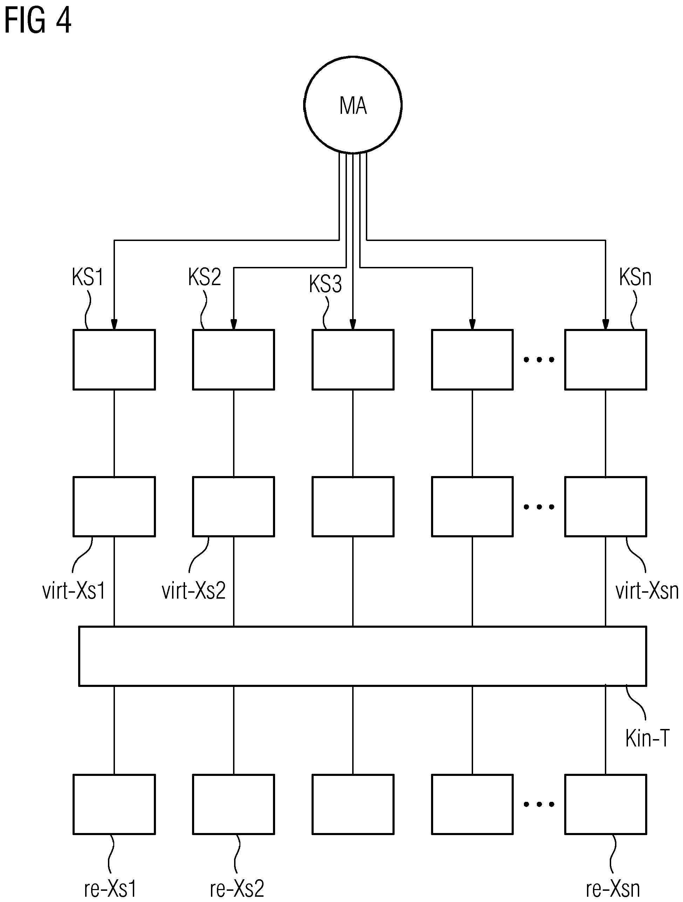

FIG 4 zeigt den Einsatz einer Kinematik-Transformation Kin T. Ausgehend von einem Master-Bewegungsprofil Xm werden über Kurvenscheibenfunktionen KS1, KS2, KS3, KSn virtuelle Slave-Bewegungsprofile virt-Xs1, virt-Xs2, virt-Xsn erzeugt. Bei dem jeweiligen virtuellen Slave-Bewegungsprofil virt-Xs1, virt-Xs2, virt-Xsn handelt es sich beispielhaft um Bewegungen eines Endeffektors eines Roboters. Beispielhaft ist das jeweilige virtuelle Slave-Bewegungsprofil virt-Xs1, virt-Xs2, virt-Xsn eine Bewegung des Endeffektors in einer Raumrichtung bzw. einer Drehrichtung.

Entsprechend dem Aufbau des Roboters kann ein virtuelles Slave-Bewegungsprofil virt-Xs1, virt-Xs2, virt-Xsn als neues Master-Bewegungsprofil virt-Xm (auch mit MA symbolisiert) betrachtet werden. Das virtuelle Master-Bewegungsprofil MA wird mit Hilfe der Kinematik-Transformation Kin-T mit zwei realen Slave-Bewegungsprofilen re-Xs3, re-X4s verknüpft. Hierbei erfolgt entsprechend die Zuordnung eines Master-Bewegungsprofils Xm mit zumindest einem Slave-Bewegungsprofil (Xs1), (Xs2). Die Verknüpfung der Bewegungsprofile Xm, Xs1, Xs2,..., wie in FIG 1 gezeigt, erfolgt nun nicht mehr über die Kurvenscheibenfunktion KS1, KS2 sondern über die Kinematik-Transformation Kin-T.

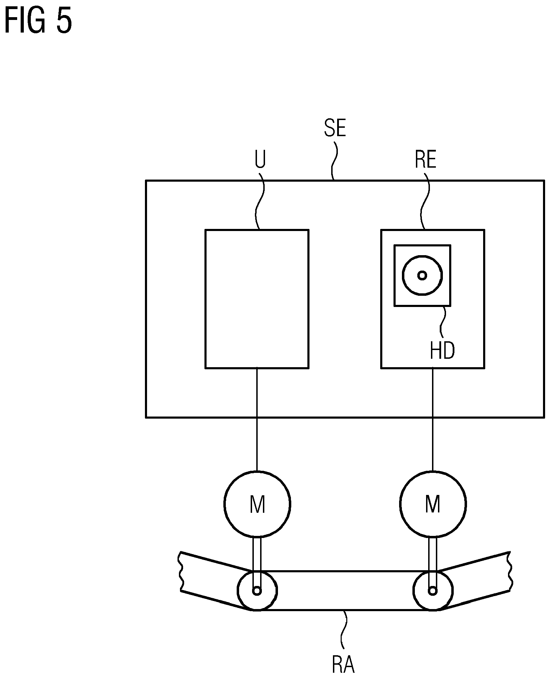

FIG 5 zeigt eine Steuereinrichtung SE mit einer Recheneinheit RE. Die Steuereinrichtung SE dient, ggf. mit Unterstützung von einem Stromrichter U (Frequenzumrichter) zur Ansteuerung von Elektromotoren M. Die Elektromotoren M dienen hier zur Bewegung eines Roboterarmes RA eines Roboters. Die Recheneinrichtung RE umfasst einen Speicher HD, insbesondere eine Festplatte oder einen Wechseldatenträger wie eine CD-Rom. Auf dem Speicher ist ein Computerprogrammprodukt gespeichert. Das Computerprogrammprodukt wird mit Hilfe der Recheneinheit RE ausgeführt und dient zur Durchführung des Verfahrens, welches z.B. in FIG 3 dargestellt ist.

Zusammengefasst betrifft die Erfindung ein Verfahren zur Optimierung zumindest eines Bewegungsprofils Xm, Xs1, Xs2, Xs3, Xsn, ein Computerprogrammprodukt zur Durchführung des Verfahrens und eine Steuereinrichtung für diesen Zweck. Ausgehend von einem Master-Bewegungsprofil Xm beschreibt zumindest ein Slave-Bewegungsprofil Xs1, Xs2, Xs3, Xsn eine Bewegung eines Aktors. Das jeweilige Slave-Bewegungsprofil Xs1, Xs2, Xs3 ist über eine Kurvenscheibenfunktion KS1, KS2, KS3, KSn und/oder eine Kinematik-Transformation Kin-T mit dem Master-Bewegungsprofil Xm, MA verbunden. Bei dem Verfahren zur Optimierung werden die Bewegungsprofile Xm, Xs1, Xs2, Xs3, Xsn in Bereiche B eingeteilt. Anhand von jeweiligen Randbedingungen RB der Slave-Bewegungsprofile Xs1, Xs2, Xs3 wird für jeden Bereich B die maximale Geschwindigkeit v_max des Master-Bewegungsprofils Xm berechnet. Weiter wird eine Differenz Diff aus der größten und der niedrigsten Maximalgeschwindigkeit v_max_max, v_max-min ausgewählt.

Der Bereich Bmax mit der höchsten Maximalgeschwindigkeit v_max-max wird anschließend so lange verkleinert und der Bereich Bmin mit der geringsten Maximalgeschwindigkeit v_max_min wird so lange vergrößert, bis die Differenz Diff der beiden Maximalgeschwindigkeiten v_max_min, v_max_max kleiner als eine Toleranz T ist

**Patentansprüche**

1. Verfahren zur Optimierung eines Slave-Bewegungsprofils (Xs1, Xs2, Xs3, Xsn), wobei zumindest ein Slave-Bewegungsprofil (Xs1, Xs2, Xs3, Xsn) jeweils von einem Master-Bewegungsprofil (Xm) abhängt,

   - wobei das jeweilige Slave-Bewegungsprofil (Xs1, Xs2, Xs3, Xsn) Randbedingungen (RB) unterliegt,
   - wobei optimierte Bewegungsprofile (Xopt, Xs1, Xs2, Xs3, Xsn, Xm) bereitgestellt werden,
   - wobei das Master-Bewegungsprofil (Xm) und das zumindest eine Slave-Bewegungsprofil (Xs1, Xs2, Xs3, Xsn) einen Definitionsbereich (D) aufweisen und der jeweilige Definitionsbereich (D) eine Mehrzahl von Interpolationspunkten (IP) aufweist, wobei die Interpolationspunkte (IP) den jeweiligen Definitionsbereich (D) in Bereiche (B) einteilen, wobei die Interpolationspunkte für jedes der Bewegungsprofile an derselben Stelle angeordnet sind,
   - wobei eine Toleranz (T) für das Master-Bewegungsprofil (Xm) vorgegeben ist,
   - wobei das Verfahren folgende Verfahrensschritte umfasst:

      - **(S1)** Definition der Bereiche (B) durch die Interpolationspunkte (IP),
      - **(S2)** Definition von Randbedingungen (RB) des jeweiligen Slave-Bewegungsprofils (Xs1, Xs2, Xs3, Xsn),
      - **(S3)** Verteilung der Interpolationspunkte (IP) auf den jeweiligen Definitionsbereich (D) des Master- Bewegungsprofils und des Slave-Bewegungsprofils (Xs1, Xs2, Xs3, Xsn, Xm),
      - **(S4)** Bestimmung der jeweiligen Maximalgeschwindigkeit (v_max) des Master-Bewegungsprofils (Xm) bei Einhaltung der Randbedingungen (RB) in dem jeweiligen Bereich (B),

      **gekennzeichnet durch**:

      - **(S5)** Bestimmung des Bereichs (Bmax) mit der höchsten Maximalgeschwindigkeit (v_max_max) des Master-Bewegungsprofils (Xm),
      - **(S6)** Bestimmung des Bereichs (Bmin) mit der niedrigsten Maximalgeschwindigkeit (v_max_min) des Master-Bewegungsprofils (Xm),
      - **(S7)** Prüfen, ob die Differenz (Diff) der höchsten Maximalgeschwindigkeit (v_max_max) und der niedrigsten Maximalgeschwindigkeit (v_max_min) größer oder kleiner als die Toleranz (T) ist

      - falls die Differenz (Diff) größer als die Toleranz (T) ist,

      - **(S8)** wird der Bereich (Bmax) mit der höchsten Maximalgeschwindigkeit (v_max_max) verkleinert, indem die Interpolationspunkte (IP) zueinander hin verschoben werden und
      - **(S9)** wird der Bereich (Bmin) mit der niedrigsten Maximalgeschwindigkeit (v_max_min) vergrößert, indem die Interpolationspunkte (IP) voneinander weg verschoben werden,
      - **(S10)** werden mit dem verkleinerten und dem vergrößerten Bereich (Bmin, Bmax) die Verfahrensschritte (S4), (S5) (S6) und (S7) durchgeführt
      - **(S11)** und falls die Differenz (Diff) kleinergleich als die Toleranz (T) ist, wird das jeweilige Bewegungsprofil (Xs1, Xs2, Xs3, Xsn, Xm) als optimiertes Bewegungsprofil (Xopt, Xs1, Xs2, Xs3, Xsn, Xm) bereitgestellt.

2. Verfahren nach Anspruch 1, wobei das Master-Bewegungsprofil (Xm) eine konstante Geschwindigkeit (v) aufweist.

3. Verfahren nach Anspruch 1 oder 2, wobei das Verfahren, insbesondere die Verfahrensschritte (S4) bis (S10), mehrmals durchgeführt wird.

4. Verfahren nach einem der vorangehenden Ansprüche, wobei die Slave-Bewegungsprofile (Xs1, Xs2, Xs3, Xsn) über eine Kurvenscheibenfunktion (KS1, KS2, KS3, KSn) mit dem Master-Bewegungsprofil (Xm) verknüpft sind.

5. Verfahren nach einem der vorangehenden Ansprüche, wobei die Bereiche (B) oder die Abstände zwischen den jeweils benachbarten Interpolationspunkten (IP) jeweils gleich groß gewählt werden.

**6.** Verfahren nach einem der vorangehenden Ansprüche, wobei die jeweilige Randbedingung (RB) eine minimale und/oder maximale Geschwindigkeit (v_ext), eine minimale und/oder maximale Beschleunigung (a_ext) und/oder ein minimaler und/oder maximaler Ruck (r_ext) ist.

**7.** Verfahren nach einem der vorangehenden Ansprüche, wobei das Master-Bewegungsprofil (Xm) und das jeweilige Slave-Bewegungsprofil (Xs1, Xs2, Xs3, Xsn) über eine Kinematik-Transformation (Kin-T) verknüpft sind.

**8.** Verfahren nach Anspruch 7, wobei das Master-Bewegungsprofil (Xm) mit virtuellen Slave-Bewegungsprofilen (virt-Xs1, virt-Xs2, virt-Xs3, virt-Xsn) verknüpft ist und das jeweilige virtuelle Slave-Bewegungsprofil (virt-Xs1, virt-Xs2, virt-Xs3, virt-Xsn) mit jeweils einem realen Slave-Bewegungsprofil (re-Xs1, re-Xs2, re-Xs3, re-Xsn) über die Kinematik-Transformation (Kin-T) verknüpft ist.

**9.** Verfahren nach Anspruch 7 oder 8, wobei das jeweilige virtuelle Bewegungsprofil (virt-Xs1, virt-Xs2, virt-Xs3, virt-Xsn) und/oder das jeweilige reale Slave-Bewegungsprofil (re-Xs1, re-Xs2, re-Xs3, re-Xsn) jeweils zumindest einer Randbedingung (RB) unterliegen.

**10.** Computerprogrammprodukt zur Ausführung auf einer Recheneinheit, wobei das Computerprogrammprodukt bei der Ausführung ein Verfahren nach einem der vorangehenden Ansprüche ausführt.

**11.** Steuereinrichtung (SE) zur Steuerung von zumindest einem Master-Antrieb und zumindest einem Slave-Antrieb, wobei die Steuereinrichtung (SE) nach der Bereitstellung der Bewegungsprofile (Xs1, Xs2, Xs3, Xsn, Xm) zur Steuerung oder Regelung von Antrieben ausgebildet ist, wobei die Steuereinrichtung (SE) eine Recheneinheit (RE) mit einem Computerprogrammprodukt gemäß dem vorangehenden Anspruch aufweist.

**12.** Anlage oder Roboter, insbesondere eine Verpackungsmaschine, ein Handlingssystem, eine Produktionsmaschine oder eine Werkzeugmaschine, aufweisend eine Steuereinrichtung (SE) nach dem vorangehenden Anspruch.

**13.** Recheneinheit mit einem Computerprogrammprodukt gemäß Anspruch 10, wobei die Recheneinheit einer Steuereinrichtung (SE) zur Steuerung von zumindest einem Master-Antrieb und zumindest einem Slave-Antrieb zugeordnet ist, wobei die Steuereinrichtung (SE) nach der Bereitstellung der Bewegungsprofile (Xs1, Xs2, Xs3, Xsn, Xm) zur Steuerung oder Regelung von Antrieben ausgebildet ist.

**Claims**

**1.** Method for optimizing a slave motion profile (Xs1, Xs2, Xs3, Xsn), wherein at least one slave motion profile (Xs1, Xs2, Xs3, Xsn) is respectively dependent on a master motion profile (Xm),

- wherein the respective slave motion profile (Xs1, Xs2, Xs3, Xsn) is subject to constraints (RB),
- wherein optimized motion profiles (Xopt, Xs1, Xs2, Xs3, Xsn, Xm) are provided,
- wherein the master motion profile (Xm) and the at least one slave motion profile (Xs1, Xs2, Xs3, Xsn) have a definition area (D) and the respective definition area (D) has a plurality of interpolation points (IP), wherein the interpolation points (IP) divide the respective definition area (D) into areas (B), wherein the interpolation points are arranged at the same location for each of the motion profiles,
- wherein a tolerance (T) is prescribed for the master motion profile (Xm),
- wherein the method comprises the following method steps:

  - **(S1)** definition of the areas (B) by the interpolation points (IP),
  - **(S2)** definition of constraints (RB) of the respective slave motion profile (Xs1, Xs2, Xs3, Xsn),
  - **(S3)** distribution of the interpolation points (IP) over the respective definition area (D) of the master motion profile and the slave motion profile (Xs1, Xs2, Xs3, Xsn, Xm),
  - **(S4)** determination of the respective maximum speed (v_max) of the master motion profile (Xm) in the event of compliance with the constraints (RB) in the respective area (B),

  **characterized by**:

  - **(S5)** determination of the area (Bmax) having the highest maximum speed (v_max_max) of the master motion profile (Xm),

- **(S6)** determination of the area (Bmin) having the lowest maximum speed (v_max_min) of the master motion profile (Xm),
- **(S7)** checking whether the difference (Diff) between the highest maximum speed (vmaxmax) and the lowest maximum speed (v_max_min) is greater or less than the tolerance (T),

- if the difference (Diff) is greater than the tolerance (T),

- **(S8)** the area (Bmax) having the highest maximum speed (v_max_max) is reduced by virtue of the interpolation points (IP) being shifted toward one another, and
- **(S9)** the area (Bmin) having the lowest maximum speed (v_max_min) is enlarged by virtue of the interpolation points (IP) being shifted away from one another,
- **(S10)** method steps (S4), (S5), (S6) and (S7) are performed with the reduced and the enlarged area (Bmin, Bmax),
- **(S11)** and if the difference (Diff) is less than or equal to the tolerance (T), the respective motion profile (Xs1, Xs2, Xs3, Xsn, Xm) is provided as the optimized motion profile (Xopt, Xs1, Xs2, Xs3, Xsn, Xm).

2. Method according to Claim 1, wherein the master motion profile (Xm) has a constant speed (v).

3. Method according to Claim 1 or 2, wherein the method, particularly method steps (S4) to (S10), is performed repeatedly.

4. Method according to one of the preceding claims, wherein the slave motion profiles (Xs1, Xs2, Xs3, Xsn) are linked to the master motion profile (Xm) via a cam disk function (KS1, KS2, KS3, KSn).

5. Method according to one of the preceding claims, wherein the areas (B) or the distances between the respectively adjacent interpolation points (IP) are respectively chosen to be of equal magnitude.

6. Method according to one of the preceding claims, wherein the respective constraint (RB) is a minimum and/or maximum speed (v_ext), a minimum and/or maximum acceleration (a_ext) and/or a minimum and/or maximum jolt (r_ext).

7. Method according to one of the preceding claims, wherein the master motion profile (Xm) and the respective slave motion profile (Xs1, Xs2, Xs3, Xsn) are linked via a kinematic transformation (Kin-T).

8. Method according to Claim 7, wherein the master motion profile (Xm) is linked to virtual slave motion profiles (virt-Xs1, virt-Xs2, virt-Xs3, virt-Xsn) and the respective virtual slave motion profile (virt-Xs1, virt-Xs2, virt-Xs3, virt-Xsn) is linked to a respective real slave motion profile (re-Xs1, re-Xs2, re-Xs3, re-Xsn) via the kinematic transformation (Kin-T).

9. Method according to Claim 7 or 8, wherein the respective virtual motion profile (virt-Xs1, virt-Xs2, virt-Xs3, virt-Xsn) and/or the respective real slave motion profile (re-Xs1, re-Xs2, re-Xs3, re-Xsn) are respectively subject to at least one constraint (RB).

10. Computer program product for execution on a computation unit, wherein the computer program product, on execution, carries out a method according to one of the preceding claims.

11. Control device (SE) for controlling at least one master drive and at least one slave drive, wherein the control device (SE) is configured to control or regulate drives after the provision of the motion profiles (Xs1, Xs2, Xs3, Xsn, Xm), wherein the control device (SE) has a computation unit (RE) having a computer program product according to the preceding claim.

12. Installation or robot, particularly a packaging machine, a handling system, a production machine or a machine tool, having a control device (SE) according to the preceding claim.

13. Computation unit having a computer program product according to Claim 10, wherein the computation unit is associated with a control device (SE) for controlling at least one master drive and at least one slave drive, wherein the control device (SE) is configured to control or regulate drives after the provision of the motion profiles (Xs1, Xs2, Xs3, Xsn, Xm).

**Revendications**

1. Procédé d'optimisation d'un profil de mouvement esclave (Xs1, Xs2, Xs3, Xsn), au moins un profil de mouvement esclave (Xs1, Xs2, Xs3, Xsn) dépendant respectivement d'un profil de mouvement maître (Xm),

   - le profil de mouvement esclave respectif (Xs1, Xs2, Xs3, Xsn) est soumis à des conditions limites (RB),
   - des profils de mouvement optimisés (Xopt, Xs1, Xs2, Xs3, Xsn, Xm) étant mis à disposition,
   - le profil de mouvement maître (Xm) et l'au moins un profil de mouvement esclave (Xs1, Xs2, Xs3, Xsn) présentant une zone de définition (D) et la zone de définition respective (D) présentant une pluralité de points d'interpolation (IP), les points d'interpolation (IP) répartissant la zone de définition respective (D) en zones (B), les points d'interpolation étant situés au même endroit pour chacun des profils de mouvement,
   - une tolérance (T) étant donnée pour le profil de mouvement maître (Xm),
   - le procédé comprenant les étapes suivantes :

      - (S1) définition des zones (B) par les points d'interpolation (IP),
      - (S2) définition de conditions limites (RB) du profil de mouvement esclave respectif (Xs1, Xs2, Xs3, Xsn),
      - (S3) répartition des points d'interpolation (IP) sur la zone de définition respective (D) du profil de mouvement maître et du profil de mouvement esclave (Xs1, Xs2, Xs3, Xsn, Xm),
      - (S4) détermination de la vitesse maximale respective (v_max) du profil de mouvement maître (Xm) en respectant les conditions limites (RB) dans la zone respective (B),

   **caractérisé par** :

      - (S5) détermination de la zone (Bmax) avec la vitesse maximale la plus élevée (v_max_max) du profil de mouvement maître (Xm),
      - (S6) détermination de la zone (Bmin) avec la vitesse maximale la plus faible (v_max_min) du profil de mouvement maître (Xm),
      - (S7) contrôle si la différence (Diff) entre la vitesse maximale la plus élevée (v_max_max) et la vitesse maximale la plus faible (v_max_min) est supérieure ou inférieure à la tolérance (T),

   - si la différence (Diff) est supérieure à la tolérance (T),

      - (S8) la zone (Bmax) avec la vitesse maximale la plus élevée (v_max_max) est réduite par décalage des points d'interpolation (IP) les rapprochant les uns des autres et
      - (S9) la zone (Bmin) avec la vitesse maximale la plus faible (v_max_i()) est agrandie par décalage des points d'interpolation (IP) les éloignant les uns des autres,
      - (S10) les étapes du procédé (S4), (S5), (S6) et (S7) sont exécutées avec la zone réduite et la zone agrandie (Bmin, Bmax)
      - (S11) et si la différence (Diff) est inférieure ou égale à la tolérance (T), le profil de mouvement respectif (Xs1, Xs2, Xs3, Xsn, Xm) est mis à disposition en tant que profil de mouvement optimisé (Xopt, Xs1, Xs2, Xs3, Xsn, Xm).

2. Procédé selon la revendication 1, le profil de mouvement maître (Xm) présentant une vitesse constante (v).

3. Procédé selon la revendication 1 ou 2, le procédé, et plus particulièrement les étapes du procédé (S4) à (S10), étant exécutés plusieurs fois.

4. Procédé selon l'une des revendications précédentes, les profils de mouvement esclaves (Xs1, Xs2, Xs3, Xsn) étant associés au profil de mouvement maître (Xm) via une fonction de came (KS1, KS2, KS3, KSn).

5. Procédé selon l'une des revendications précédentes, les zones (B) ou les distances entre les points d'interpolation (IP) respectivement voisins étant choisies telles qu'elles sont respectivement de même taille.

6. Procédé selon l'une des revendications précédentes, la condition limite respective (RB) étant une vitesse (v_ext) minimale et/ou maximale, une accélération (a_ext) minimale et/ou maximale et/ou une secousse (r_ext) minimale et/ou maximale.

7. Procédé selon l'une des revendications précédentes, le profil de mouvement maître (Xm) et le profil de mouvement esclave respectif (Xs1, Xs2, Xs3, Xsn) étant associés via une transformation cinématique (Kin-T).

8. Procédé selon la revendication 7, le profil de mouvement maître (Xm) étant associé à des profils de mouvement esclaves virtuels (virt-Xs1, virt-Xs2, virt-Xs3, virt-Xsn) et le profil de mouvement esclave virtuel respectif (virt-Xs1, virt-Xs2, virt-Xs3, virt-Xsn) étant associé respectivement à un profil de mouvement esclave réel (re-Xs1, re-Xs2, re-Xs3, re-Xsn) via la transformation cinématique (Kin-T).

9. Procédé selon la revendication 7 ou 8, le profil de mouvement virtuel respectif (virt-Xs1, virt-Xs2, virt-Xs3, virt-Xsn) et/ou le profil de mouvement esclave réel respectif (re-Xs1, re-Xs2, re-Xs3, re-Xsn) étant respectivement soumis à au moins une condition limite (RB).

10. Produit de programme informatique destiné à être exécuté sur une unité de calcul, le produit de programme informatique exécutant, lors de son exécution, un procédé selon l'une des revendications précédentes.

11. Dispositif de commande (SE) pour commander au moins un entraînement maître et au moins un entraînement esclave, le dispositif de commande (SE) étant, après la mise à disposition des profils de mouvement (Xs1, Xs2, Xs3, Xsn, Xm), réalisé pour commander ou régler des entraînements, le dispositif de commande (SE) comprenant une unité de calcul (RE) avec un produit de programme informatique selon la revendication précédente.

12. Installation ou robot, et plus particulièrement machine de conditionnement, système de manutention, machine de production ou machine-outil, comprenant un dispositif de commande (SE) selon la revendication précédente.

13. Unité de calcul avec un produit de programme informatique selon la revendication 10, l'unité de calcul étant associée à un dispositif de commande (SE) pour la commande d'au moins un entraînement maître et d'au moins un entraînement esclave, le dispositif de commande (SE) étant, après la mise à disposition des profils de mouvement (Xs1, Xs2, Xs3, Xsn, Xm), réalisé pour commander ou régler des entraînements.

# FIG 1

FIG 2

# FIG 3

S1 — Def: IP, B

S2 — Def: RB

S3 — (IP)GD

S4 — V_max (Xm)

S5 — V_max_max

S10

S6 — V_max_min

S9 — Bmin ↗

S7 — T≥Diff     N → Bmax ↘ — S8

Y

S11 — Xopt

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10201223898 A1
- EP 2952991 A1
- EP 2680095 A1
- DE 102007049447 A1